# EUROPÄISCHE PATENTANMELDUNG

(11) **EP 4 321 776 A1**
(43) Veröffentlichungstag der Anmeldung: **14.02.2024**
(21) Anmeldenummer: 23190688.4
(22) Anmeldetag: 09.08.2023
(51) Int. Cl.: F16H 55/12

(54) **MEHRREIHIGE ZAHNRADEINRICHTUNG SOWIE VERFAHREN UND VORRICHTUNG ZUR HERSTELLUNG DERSELBEN**

(30) Priorität: 12.08.2022 DE 102022120450
(71) Anmelder: Aerospace Transmission Technologies GmbH, 88046 Friedrichshafen (DE)
(72) Erfinder: Kappmeyer, Gregor, 15827 Blankenfelde-Mahlow (DE); Sowa, Tim, 88046 Friedrichshafen (DE); Gerstenberger, Robert, 88046 Friedrichshafen (DE); Artschwager, André, 15827 Blankenfelde-Mahlow (DE); Krüger, David, 15827 Blankenfelde-Mahlow (DE)
(74) Vertreter: Zöschinger, Christian

(57) **Zusammenfassung**

Die Erfindung bezieht sich auf ein Verfahren und eine Vorrichtung zur Herstellung einer Zahnradeinrichtung, die sich bezüglich ihrer Verzahnung aus mehreren zusammengefügten Bauteilkomponenten zusammensetzt und dabei wenigstens einen ersten und einen zweiten jeweils als Teil der genannten Bauteilkomponenten separat gefertigten und insbesondere eine Schrägverzahnung aufweisenden Zahnkranz umfasst, wobei diese beiden Zahnkränze axial abfolgend angeordnet sind und hierbei eine zweireihige Zahnradstruktur bilden. Weiterhin richtet sich die Erfindung auch auf eine wenigstens zweireihige, insbesondere schräg verzahnte Zahnradeinrichtung, die in verbautem Zustand Teil eines Umlaufrädergetriebes, insbesondere eines Planetengetriebes eines Flugzeugtriebwerks bildet. Die Bauteilkomponenten werden unter Ausbildung einer stofflichen Verbindung zusammengefasst. Die Ausbildung der stofflichen Verbindung erfolgt in Verbindung mit einer besonderen Positionierung der Bauteilkomponenten zueinander.

## Beschreibung

Die Erfindung bezieht sich auf ein Verfahren und eine Vorrichtung zur Herstellung einer Zahnradeinrichtung, die sich bezüglich ihrer Verzahnung aus mehreren zusammengefügten Bauteilkomponenten zusammensetzt und dabei wenigstens einen ersten und einen zweiten jeweils als Teil der genannten Bauteilkomponenten separat gefertigten und insbesondere eine Schrägverzahnung aufweisenden Zahnkranz umfasst, wobei diese beiden Zahnkränze axial abfolgend angeordnet sind und hierbei eine zweireihige Zahnradstruktur bilden. Weiterhin richtet sich die Erfindung auch auf eine wenigstens zweireihige, insbesondere schräg verzahnte Zahnradeinrichtung, die in verbautem Zustand Teil eines Umlaufrädergetriebes, insbesondere eines Planetengetriebes eines Flugzeugtriebwerks bildet.

Aus US 2009/ 011639 A1 ist ein Flugzeugtriebwerk bekannt, das ein Planetengetriebe mit zweireihigen schräg verzahnten Zahnrädern umfasst. Bei diesem Flugzeugtriebwerk ist das Sonnenrad in zwei axial abfolgende Zahnkränze zerlegbar geteilt.

Aus US 2016/0097330 A1 und US 2016/0298751 A1 sind ebenfalls Flugzeugtriebwerke bekannt, bei welchen jeweils Planetengetriebe mit zweireihig schräg verzahnten Zahnrädern vorgesehen sind. Bei diesen Getrieben wird die Montierbarkeit der Zahnradkomponenten und die Zerlegbarkeit des Planetengetriebes bewerkstelligt, indem das jeweilige Hohlrad als axial gebaute und sich dabei aus zwei innenverzahnten Hohlradringen zerlegbar zusammensetzende Zahnradeinrichtung gestaltet ist.

Bei den mehrreihigen Zahnrädern besteht das Problem, dass neben engen Formtoleranzkriterien für die Geometrie der Verzahnung jedes Zahnkranzes auch für die Relativpositionen der Zahnkränze zueinander komplexe Lagetoleranzkriterien bestehen, welchen fertigungstechnisch nur mit hohem Aufwand und konstruktiven Einschränkungen entsprochen werden kann. Weiterhin besteht das Problem, dass sich durch die Anforderungen an die Festigkeit der Verzahnung für die Bearbeitung hiervon abseits liegender Bauteilbereiche Erschwernisse ergeben.

### Aufgabe der Erfindung

Der Erfindung liegt die Aufgabe zugrunde, Lösungen zu schaffen durch welche es möglich wird, eine Zahnradeinrichtung mit wenigstens zwei, insbesondere schräg verzahnten Zahnkränzen zu schaffen, die sich innerhalb eines Getriebes durch ein vorteilhaftes mechanisches Betriebsverhalten auszeichnet und unter fertigungstechnischen Gesichtspunkten vorteilhaft herstellbar ist.

### Erfindungsgemäße Lösung

Diese Aufgabe wird gemäß einem ersten Aspekt der vorliegenden Erfindung gelöst durch ein Verfahren zur Herstellung einer Zahnradeinrichtung mit einem ersten und einem zweiten Zahnradkranz, mit den Schritten:
- Bereitstellen einer ersten Bauteilkomponente, die den ersten Zahnkranz bildet, der sich axial zwischen einer ersten Stirnseite und einer zweiten Stirnseite erstreckt;
- Bereitstellen einer zweiten Bauteilkomponente, die den zweiten Zahnkranz bildet, der sich axial zwischen einer dritten und einer vierten Stirnseite erstreckt;
- Anordnen der beiden Bauteilkomponenten derart, dass diese mit ihren jeweiligen Zahnkranzachsen auf einer gemeinsamen zentralen Zahnradachse liegen und hierbei die zweite Stirnseite des ersten Zahnkranzes und die dritte Stirnseite des zweiten Zahnkranzes einander zugewandt sind und
- Einbinden der beiden Bauteilkomponenten in die Zahnradeinrichtung derart, dass diese drehfest miteinander verbunden und axial zueinander festgelegt sind,
- wobei das Einbinden wenigstens einer der beiden Bauteilkomponenten in die Zahnradeinrichtung bewerkstelligt wird durch Ausbildung einer stofflichen Verbindungzone die sich entlang einer Verbindungsfläche erstreckt, die durch wenigstens eine der beiden Bauteilkomponenten bereitgestellt wird.

Dadurch wird es auf vorteilhafte Weise möglich, eine mehrreihige Zahnradeinrichtung zu schaffen, bei welcher die beiden Zahnkränze nach Maßgabe von engen Formtoleranzen zunächst separat gefertigt werden können, wobei den Lagetoleranzkriterien der beiden Zahnkränze zueinander, sowie einem Zentrizitätskriterium durch die Abwicklung der Einbindung entsprochen werden kann.

Diese Abwicklung der Einbindung kann dabei so bewerkstelligt werden, dass die Zahnkränze in einer Ausrichtung vorgehalten werden, welche einen Lageänderungseffekt kompensiert oder berücksichtigt, der sich im Rahmen der Ausbildung der stofflichen Verbindung einstellt. Die Geometrie der Bauteilkomponenten ist dabei vorzugsweise zumindest im Bereich der Verbindungsfläche so abgestimmt, dass die Vorpositionierung der Bauteilkomponenten mit einer hinreichenden Positionierungsfreiheit bewerkstelligt werden kann.

Es ist auch möglich, an den Bauteilkomponenten Positionierungsflächen vorzugsehen, durch welche erreicht wird, dass sich nach Ausbildung der Verbindungszone eine geforderte Relativposition der Bauteilkomponenten zueinander ergibt. Das Verfahren wird hierbei vorzugsweise derart abgewickelt, dass ein Toleranzkriterium für die Gesamtgeometrie der mehrreihigen Verzahnung sowie vorzugsweise auch ein Oberflächenkriterium für die Verzahnung im Rahmen einer abschließenden Feinbearbeitung der Verzahnung erfüllt wird.

Die Bereitstellung der beiden Bauteilkomponenten erfolgt unter Einhaltung von Formkritierien für die Verzahnungen der beiden Zahnkränze. Das Einbinden der beiden Bauteilkomponenten in die Zahnradeinrichtung erfolgt unter Einhaltung von Positionskriterien der beiden Zahnkränze zueinander. Nach dem Verbinden der beiden Bauteilkomponenten kann die so geschaffene Einheit weiteren Formkriterien durch weitere Nachbearbeitung Rechnung tragen.

An den beiden Bauteilkomponenten können in vorteilhafter Weise Geometrien vorgesehen sein, durch welche eine direkte oder auch unter Einbindung einer Zwischenstruktur indirekte formschlüssige Koppelung und Lageausrichtung der Bauteilkomponenten erreicht wird. Die stoffliche Verbindung kann im Bereich dieser an sich formschlüssig tragenden Strukturen realisiert werden.

Das Verbindungsmedium wird dann lasttragendes Füllmaterial eines ausgefüllten Spaltes zwischen zwei Komplementärgeometrien die sich formschlüssig - vorzugsweise primär normal zum Spalt - über das den Spalt füllende Material aneinander stützen. Soweit die stoffliche Verbindung durch Zugabe oder Einbringung eines Verbindungsmateriales bewerkstelligt wird, können die zur formschlüssigen Koppelung vorgesehenen Komplementärgeometrien Spaltmaße generieren, welche einen Zugang des Verbindungsmateriales zuverlässig ermöglichen.

Es können im Bereich der Komplementärgeometrien Zonen mit unterschiedlichem Spaltmaß definiert werden, so können Komplementärgeometrien teilweise mit engem Sitz die Relativposition der Bauteilkomponenten bestimmen und benachbarte Spaltbereiche größere Spalthöhen aufweisen und damit den Zugang des Verbindungsmediums befördern.

Es ist möglich, die Bauteilkomponenten so auszubilden, dass für die Umfangsposition der Bauteilkomponenten zueinander größere Positionierungsfreiheit besteht als für die Zentrizität und Fluchtung der Achsen der beiden Bauteilkomponenten.

Die stoffliche Verbindung kann als Schweißverbindung, als Lötverbindung und/oder als Klebeverbindung realisiert werden. Bei der Realisierung der stofflichen Verbindung als Schweißverbindung wird diese vorzugsweise als Elektronenstrahlschweißverbindung ausgeführt. Bei der Realisierung der stofflichen Verbindung als Lötverbindung wird diese vorzugsweise als Hochtemperatur Diffusionslötverbindung insbesondere mit einer Nickellegierung realisiert.

Das erfindungsgemäße Konzept kann zur Bildung von Zahnradeinrichtungen herangezogen werden, bei welchen die zusammengefügten Bauteilkomponenten aus unterschiedlichen Werkstoffen bestehen. So können die Zahnkränze aus Stahlwerkstoffen, aus Keramikwerkstoffen, aus Sinterwerkstoffen, aus Kunstoffen oder Verbundwerkstoffen gefertigt werden. Eine Kernstruktur der Zahnradeinrichtung kann hierbei aus einem Leichtwerkstoff, insbesondere Titan oder Aluminium gefertigt werden.

Nicht-tragende räumliche Zonen der Zahnradeinrichtung können mit Hohlräume aufweisenden Materialien, insbesondere Metallschaumwerkstoffen ausgefüllt sein. Entsprechende Füllkörper können über eine stoffliche Verbindung in die Zahnradeinrichtung eingebunden sein.

Die beiden Bauteilkomponenten können durch das erfindungsgemäße Verfahren zu einer Baugruppe zusammengefügt werden, die eine hohe Lagegenauigkeit, insbesondere Fluchtung der geometrischen Zahnkranz-Zentralachsen sowie der Umfangsrelativposition der beiden Zahnkränze sicherstellt, wobei dann an dieser Baugruppe unter Bezugnahme auf die Lage der Verzahnung Fügeflächen nachgearbeitet werden können, die wiederum eine Einbindung der Baugruppe in eine erweiterte Gesamtstruktur ermöglichen. Diese Fügeflächen können dann wiederum formschlüssig Last-tragende Komplementärgeometrien darstellen.

Es ist hierbei insbesondere möglich, zunächst die beiden die Zahnkränze tragenden Bauteilkomponenten stofflich zu verbinden, die so geschaffene Einheit erforderlichenfalls einer weiteren materialabtragenden Bearbeitung oder Behandlung zu unterziehen und diese Baugruppe weiter in eine sich hierbei ergebende Zahnradeinrichtung einzubinden, z.B. auf einem Kernzapfen zu sichern.

Das Zusammenfügen der beiden Bauteilkomponenten kann hierbei insbesondere unter Einbindung einer Buchsenstruktur erfolgen auf welcher die beiden Bauteilkomponenten angeordnet und mit dieser oder miteinander stofflich verbunden werden. Diese Buchsenstruktur und die beiden Bauteilkomponenten können formschlüssig koppelnde Komplementärgeometrien bereitstellen. Die Komplementärgeometrien können insbesondere elektroerosiv gefertigt oder nachgearbeitet werden.

Die eingangs angegebene Aufgabe wird gemäß einem weiteren Aspekt der vorliegenden Erfindung auch gelöst durch eine Vorrichtung zur Durchführung des Verfahrens der oben genannten Art, mit:
- einer Positioniereinrichtung zur Positionierung der ersten und der zweiten Bauteilkomponenten zueinander und
- einer Verbindungseinrichtung zur Ausbildung einer Kohäsions- und/oder Adhäsions-Verbindungsstelle innerhalb der Zahnradeinrichtung.

Dadurch wird es auf vorteilhafte Weise möglich, die beiden Bauteilkomponenten unter Belassung eines Spaltes oder unter Entlastung von Sitzflächen so zueinander zu positionieren, dass hinsichtlich der Relativposition der Zahnkränze zueinander engen Lagetoleranzen entsprochen werden kann.

Die Positionierung der beiden Bauteilkomponenten zueinander kann auch in Verbindung mit taktilen und/oder optischen Messverfahren zur Bestimmung der relativen Position und Ausrichtung der Bauteilkomponenten, insbesondere der Zahnkränze und deren Korrektur zueinander erfolgen.

Die Bauteilkomponenten können zueinander z.B. mittels einstellbarer Vorrichtungselemente oder Kraftschluss fixiert werden. Die Fixierung kann derart bewerkstelligt werden, dass hierbei definierte Spalte zwischen den Bauteilkomponenten verbleiben oder keine signifikanten Kontaktkräfte direkt zwischen den Bauteilkomponenten wirksam sind.

Die Positioniereinrichtung kann in vorteilhafter Weise derart ausgebildet sein, dass diese Stellmittel umfasst, zur Einstellung der Position der Bauteilkomponenten zueinander. Es ist möglich, über diese Stellmittel noch im Rahmen der Ausbildung der stofflichen Verbindung Positionsveränderungen vorzunehmen. Die Stellmittel können hierzu Aktuatoreinrichtungen insbesondere hochsteife Präzisionsstelltriebe umfassen. So kann beispielsweise durch die Positioniervorrichtung zunächst eine Position der Bauteilkomponenten eingestellt werden, die einen vorteilhaften Zugang eines Verbindungsmediums, insbesondere eines Lotes oder eines Klebstoffes sicherstellt, wobei dann in einer ausgewählten zeitlichen Phase des Fügevorganges die beiden Bauteilkomponenten in eine Position gebracht werden, die eine ideale Position für die zeitliche Phase der Erlangung der Tragfähigkeit der stofflichen Verbindung darstellt.

Die Positioniereinrichtung kann weiterhin auch ein definiertes Wandern der Bauteilkomponenten zueinander zulassen. So kann durch die Fixiereinrichtung die Umfangsposition der beiden Bauteilkomponenten mit einer definierten engen Toleranz festgelegt werden, jedoch ein axiales Wandern der Bauteilkomponenten aufgrund von thermischen oder gefügetechnischen oder chemischen Effekten noch zugelassen werden. Die Positioniereinrichtung kann auch primär auf die Einhaltung eines Fluchtungskriteriums der Achen der beiden Zahnkränze ausgelegt sein und ansonsten Freiheitsgrade vorsehen.

Die Positioniereinrichtung kann gemäß einem weiteren Aspekt der vorliegenden Erfindung in vorteilhafter Weise auch eine Anordnung zur messtechnischen Erfassung der räumlichen Lage der Bauteilkomponenten zueinander, insbesondere hinsichtlich der Winkelrelativposition der Zahnkränze indikativer Signale umfassen. Die Einstellung der Relativposition der Bauteilkomponenten zueinander kann dabei gesteuert oder auch unter Rückgriffnahme auf eine entsprechende Signalrückführung, geregelt erfolgen.

Gemäß einem weiteren Aspekt er vorliegenden Erfindung ist es möglich, durch Ansteuerung der Positioniereinrichtung Informationen über die Spaltsituation, insbesondere Anlageeffekte zwischen den Bauteilkomponenten zu erlangen. So können Anlagepositionen zwischen den Bauteilkomponenten angefahren werden und hieraus eine optimale Mittenposition oder Abstandsposition ermittelt werden.

Für die Einstellung der Umfangsposition der Bauteilkomponenten zueinander kann beispielsweise eine Aufnahme für die Zahnräder am Innendurchmesser und ein hochauflösender Winkel-Encoder sowie ein gesteuerter Präzisionsstelltrieb vorgesehen sein, so dass dann über ein Einmessen der Verzahnung eine entsprechende Positionierung der beiden Verzahnungsträger zueinander herbeigeführt werden kann.

Hinsichtlich einer Zahnradeinrichtung wird die eingangs genannte Aufgabe erfindungsgemäß auch gelöst durch eine Zahnradeinrichtung mit:
- einer ersten Bauteilkomponente, die einen ersten Zahnkranz bildet, der sich axial zwischen einer ersten Stirnseite und einer zweiten Stirnseite erstreckt und
- einer zweiten Bauteilkomponente, die einen zweiten Zahnkranz bildet, der sich axial zwischen einer dritten und einer vierten Stirnseite erstreckt;
- wobei die erste Bauteilkomponente und die zweite Bauteilkomponente zu einer Zahnradachse gleichachsig angeordnet sind und die zweite Stirnseite des ersten Zahnkranzes und die dritte Stirnseite des zweiten Zahnkranzes einander zugewandt sind;
- der erste Zahnkranz und der zweite Zahnkranz gleiche Kopfkreisdurchmesser aufweisen und
- die beiden Bauteilkomponenten miteinander drehfest gekoppelt und axial zueinander festgelegt sind
- wobei die Einbindung wenigstens einer der beiden Bauteilkomponenten in die Zahnradeinrichtung bewerkstelligt ist durch eine Adhäsions- und/oder Kohäsionsverbindungszone die sich im Bereich einer durch wenigstens eine der Bauteilkomponenten bereitgestellten Verbindungsfläche erstreckt.

Dadurch wird es auf vorteilhafte Weise möglich, eine Zahnradeinrichtung zu schaffen, bei welcher in enger Nachbarschaft zwei mit optimaler Zahngeometrie in engen Formtoleranzen gefertigte Zahnkränze mit hoher Lagegenauigkeit zueinander angeordnet sind. Die jeweiligen Zahnkränze der Bauteilkomponenten können als separate Bauteile ohne Rücksicht auf Nachbargeometrien vorteilhaft zumindest nahezu auf Endmaß gefertigt werden. Durch die erfindungsgemäße Einbindung können die Zahnkränze eine hohe Lagegenauigkeit zueinander erlangen. Die so geschaffene Einheit kann unter geringem Materialabtrag einer Finishing Behandlung unterzogen werden.

Vorzugsweise ist der erste Zahnkranz schräg verzahnt ausgebildet. Vorzugsweise ist alternativ oder ergänzend der zweite Zahnkranz schräg verzahnt ausgebildet.

Die Zahnradeinrichtung kann in vorteilhafter Weise derart ausgebildet sein, dass die Verbindungsfläche eine zur Zahnradachse quer ausgerichtete Radialfläche ist. Im Bereich dieser Radialfläche können Strukturen ausgebildet sein, welche eine formschlüssige Koppelung und/oder Zentrierung der beiden Bauteilkomponenten unterstützen. Alternativ zu dieser Maßnahme oder auch in Kombination hiermit ist es auch möglich, die Zahnradeinrichtung so zu gestalten, dass die Verbindungsfläche eine zur Zahnradachse konzentrische Umfangsfläche ist. Diese Fläche kann als reine Zylinderfläche, als Kegelfläche oder gewölbte Gürtelfläche gestaltet sein, sie kann ebenfalls mit Mitnehmerstrukturen, z.B. einer Verzahnung, Axialnuten oder einer Passfederstruktur versehen sein.

Diese Strukturen können im Rahmen der Ausbildung der stofflichen Verbindung, insbesondere der Löt- oder Klebeverbindung verbleiben. Im Rahmen der Ausbildung der stofflichen Verbindung als Schweißverbindung, können diese Strukturen auch aufgeschmolzen werden.

Von dem Begriff "stoffliche Verbindung" sind im Kontext der vorliegenden Anmeldung neben Schweiß- Löt- und Klebeverbindungen auch Sinter- und Pressschmelzverbindungen umfasst.

Eine unter fertigungstechnischen Gesichtspunkten vorteilhafte Ausführungsform der Erfindung ist dadurch gegeben, dass die beiden Zahnradstrukturabschnitte Kontaktflächen bilden, über welche eine axiale Endposition der beiden Zahnradstrukturabschnitte festgelegt ist. Diese Kontaktflächen können insbesondere als Ringstirnflächen ausgebildet sein durch welche auch die Fluchtung der Achsen der beiden Bauteilkomponenten unterstützt wird. Diese Ringstirnflächen können komplementär profiliert sein. Diese Kontaktflächen sind vorzugsweise durch Flächen gebildet, die nicht zur Ausbildung der stofflichen Verbindung herangezogen werden.

Die beiden jeweils Zahnradstrukturabschnitte bildenden Bauteilkomponenten sind vorzugsweise im Bereich dieser um die Zentralachse der Zahnradeinrichtung verlaufenden Kontaktflächen unmittelbar miteinander verbunden, alternativ hierzu, oder in Kombination mit dieser Maßnahme können die beiden Bauteilkomponenten auch unter Einbindung eines Verbindungsgliedes, insbesondere einer Buchse, eines Zapfens oder Ringes miteinander verbunden sein, wobei dieses Verbinden die Ausbildung einer stofflichen Verbindung, d.h. einer Schweiß-Löt- oder Klebeverbindungszone bedeutet.

Durch das erfindungsgemäße Konzept wird es möglich, die Zahnradeinrichtung mit reduzierter Gesamtmasse zu fertigen. Hierzu kann in vorteilhafter Wiese radial innerhalb der einander zugewandten Stirnflächen der Zahnkränze an wenigstens einem der Zahnradstrukturabschnitte ein Einstich oder eine zur Zahnradachse koaxiale insbesondere ringkanalartige Einsenkung ausgebildet werden. Durch diese Maßnahme wird auch eine vorteilhafte definierte Reduktion der radialen Steifigkeit des entsprechenden Zahnkranzes im inneren Endbereich d.h. "unter dem Pfeilspitzenbereich" der Verzahnung erreicht. Der durch diese Gestaltung bereitgestellte Bereich kann mit einer Leichtwerkstoffstruktur ausgefüllt werden. Über diese Struktur kann ebenfalls die Koppelung der beiden Bauteilkomponenten bewerkstelligt werden, insbesondere indem diese Struktur unter Ausbildung der beschriebenen stofflichen Verbindung in die Zahnradeinrichtung eingebunden wird. Diese Füllstruktur kann durch formschlüssig tragende Komplementärgeometrien die Koppelung der beiden Bauteilkomponenten unterstützen. Diese Füllstruktur kann insbesondere aus einer Leichtmetalllegierung oder auch Titan gefertigt sein.

Bei der erfindungsgemäßen Zahnradeinrichtung wird die Einbindung oder Festlegung wenigstens einer der beiden als Zahnradstrukturabschnitt fungierenden Bauteilkomponenten in die Zahnradeinrichtung bewerkstelligt, indem die beiden Zahnradstrukturabschnitte durch eine Positioniereinrichtung zueinander positioniert werden und in der so vorgegebenen Position miteinander verschweißt, verlötet und/oder verklebt werden. Die Positioniereinrichtung ist vorzugsweise so ausgebildet, dass durch deren Haltewirkung die Erlangung einer optimalen Endposition der beiden Bauteilkomponenten erreicht wird.

Bei der erfindungsgemäßen Zahnradeinrichtung kann in der durch die stoffliche Verbindung festgelegten Stellung der beiden Zahnkränze zueinander eine Nachbearbeitung der Zahnkränze im Bereich der einander zugewandten Stirnseiten erfolgen. Diese Bearbeitung kann derart bewerkstelligt werden, dass zwischen den einander zugewandten Stirnendflächen der Zähne der Zahnkränze ein maßlich definierter Spalt freigelegt wird. Die Gestalt und Lage dieses Spaltes, d.h. dessen Weite und Mitte können in vorteilhafter Weise nach Maßgabe der Umfangsposition der Zahnkränze zueinander festgelegt werden.

Die erfindungsgemäße Zahnradeinrichtung bildet vorzugsweise ein Planetenrad oder ein Sonnenrad eines Umlaufrädergetriebes in Form eines Planetengetriebes. Das erfindungsgemäße Konzept eignet sich auch zur Realisierung eines Hohlrades mit radial nach innen weisenden Zähnen.

Die durch die wenigstens zwei Zahnkränze gebildete Verzahnung ist vorzugsweise eine Evolventenverzahnung mit schräg angestellten Zähnen. Beide Zahnkränze haben vorzugsweise den gleichen Kopfkreisdurchmesser und weisen identische Zahnquerschnitte und vorzugsweise auch gleiche in Richtung der Zahnradzentralachse gemessene Breitenmaße der Zahnkränze auf. Die Ausrichtung der beiden Verzahnungen ist derart getroffen, dass sich eine auch als Pfeilverzahnung oder Herringbonegear-Verzahnung bezeichnete Verzahnung ergibt. Der axiale Abstand der beiden Zahnreihen kann kleiner bemessen werden, als dieser bei herkömmlichen Fertigungsweisen für den Auslauf eines Bearbeitungswerkzeuges erforderlich ist. Der jeweilige Zahnkranz kann vor Ausbildung der stofflichen Verbindung weitgehend auf Endmaß gefertigt werden und auch einer Gefügebehandlung unterzogen sein.

Als Werkstoffe für die beiden Bauteilkomponenten können insbesondere Stahl, Leichtmetall, Keramikmaterialien, Sintermaterialien, Kunststoffe und Verbundmaterialien herangezogen werden. Das Finishing der Verzahnungen kann im gefügten Zustand erfolgen. Weiterhin ist eine nachträgliche Bearbeitung einer die beiden Bauteilkomponenten tragenden Trägerstruktur möglich. Das Finishing der Zahnradeinrichtung im Hinblick auf die Erlangung der Endgeometrie der Zahnradeinrichtung kann unter Berücksichtigung der sich nach dem Fügen der beiden Bauteilkomponenten ergebenden geometrischen Verhältnisse erfolgen.

Die beiden Bauteilkomponenten können zumindest hinsichtlich bestimmter Freiheitsgrade unter Formschluss sowie unter Ausbildung einer vorzugsweise im Bereich der Formschluss-Strukturen ausgebildeten stofflichen Verbindung miteinander gekoppelt werden. Die Bauteile werden vorzugsweise vor der Ausbildung der stofflichen Verbindung derart vorpositioniert, dass hierbei etwaige positionsrelevante Einwirkungen der Verbindungsbildung in der Weise Berücksichtigung finden, dass sich eine gewünschte Geometrie der gebildeten Gesamtstruktur ergibt. Dies kann insbesondere durch ein Vorhalten von Abweichungen in der Verbindungstechnik z.B. von Winkelabweichungen erfolgen. Insbesondere kann eine axiale Verlagerung der Komponenten oder eine Abstandsänderung derselben aufgrund eines Volumenschwundes im Lötspalt so berücksichtigt werden, dass die Ausrichtung der Verzahnungen zueinander in dieser nach Schwindung des Lotes erlangten Position den Anforderungen von engen Lagetoleranzen entspricht.

Die Verbindung der beiden als Zahnradstrukturabschnitte fungierenden Bauteilkomponenten kann nicht nur durch physischen Formschluss, sondern auch mittels Prozessen erfolgen, die folgende Prozessschritte beinhalten:
- Messen der einzelnen Zahnradstrukturabschnitte
- Anwendung von empirisch oder rechnerisch erstellten Modellen zur Bestimmung von prozessbedingten Abweichungen von Folgeprozessen (z.B. Fügeprozesse) und Bestimmung von Korrekturwerten
- Anwendung der Korrekturwerte bei der Fertigung der Fügeflächen an einer oder mehreren Zahnradstrukturabschnitte darstellenden Bauteilkomponenten zur Positionierung der Zahnradstrukturabschnitte zueinander.

Die Verbindung der beiden Zahnradstrukturabschnitte kann insbesondere durch mindestens eine Schweißnaht oder stoffliche Verbindungsstelle und optional mindestens ein weiteres Bauteil, das mit beiden Einzelzahnrädern verbunden ist, erfolgen. Es können also die beiden die Zahnkränze bildenden Bauteilkomponenten miteinander stofflich verbunden werden, sie können unter Einbindung mindestens eines weiteren Bauteils verbunden werden.

Es kann die stoffliche Verbindung sowohl zwischen den Bauteilkomponenten und dem weiteren Bauteil als auch zwischen den Bauteilkomponenten an sich und den Bauteilkomponenten und dem zusätzlichen Bauteil realisiert werden. Die stofflichen Verbindungen können dabei unterschiedlicher Art sein. So können die beiden Bauteilkomponenten mit dem beispielsweise als Buchse ausgestalteten weiteren Bauteil verlötet und miteinander partiell verschweißt sein.

Als Fügeflächen und zur Positionierung der die Zahnradstrukturabschnitte bildenden Bauteilkomponenten zueinander sind beispielhaft und nicht ausschließlich unterschiedliche Formelemente zu nennen wie Passfedern, Spline Verzahnungen, Polygongeometrien und Passbohrungen. Eine weitere besondere Ausbildungsform einer Fügefläche ist eine Gleichdickgeometrie oder eine in Umfangsrichtung um eine Zentralachse der Zahnradeinrichtung tragende Polygongeometrie. Weiterhin ist es auch möglich, wenigstens eine Fügefläche als Kegelfläche zu gestalten.

Nach dem Fügen der Zahnradstrukturabschnitte kann eine messtechnisch bestimmte Abweichung der Zahnradstrukturabschnitte zueinander mittels eines abtragenden Feinbearbeitungsverfahrens (z.B. Zahnradhonen, Fräsen, Drehen, Schleifen) korrigiert werden. Diese Bearbeitung wird vorzugsweise an einem oder beiden der Zahnradstrukturabschnitte durchgeführt. Der jeweils andere Zahnradstrukturabschnitt kann dabei als Referenz dienen.

Die Positionierung der beiden Zahnradstrukturabschnitte zueinander kann auch durch taktile oder optische Messverfahren zur Bestimmung der relativen Position und Ausrichtung der Zahnradstrukturabschnitte und deren Korrektur zueinander erfolgen. Die Zahnradstrukturabschnitte werden dann vorzugsweise zueinander z.B. mittels einstellbarer Vorrichtungselemente oder Kraftschluss fixiert

Die Ausrichtung der beiden als Zahnradstrukturabschnitte Bauteilkomponenten kann zueinander kann die Einstellung einer definierten Abweichung entsprechend in Position und Ausrichtung zueinander umfassen.

Das Fügeverfahren kann auch Gießen und/oder Sintern umfassen. Zur Verbindung der Zahnradstrukturabschnitte können die Fügeflächen so gestaltet werden, dass ein durch Verbindungsmaterial auszufüllendes Volumen entsteht. Dieses Volumen wird durch ein Verbindungsmaterial wie z.B. sinterfähige Pulver, Granulate oder aushärtbare Klebemittel ausgefüllt wodurch die Einzelteile der Zahnradeinrichtung einschließlich beider Zahnradstrukturabschnitte miteinander verbunden werden.

Die Erfindung betrifft insgesamt die Herstellung von Zahnrädern für ein Getriebe. Es werden hierbei die Zähne der Verzahnung und ein diese tragender Unterbau oder entsprechende Stützstrukturen separat gefertigt und anschließend gefügt. In vorteilhafter Weise sind dadurch Eigenschaften der jeweiligen Komponenten besser anpassbar als bei einem aus einem Block gefertigten Zahnrad.

Die Unterteilung der Fügeflächen bzw. das Auftrennen des Zahnrads kann in axialer oder in horizontaler Richtung erfolgen. Die Fügeverfahren werden entsprechend dem ausgewählten Material gewählt. Bei einer axialen Auftrennung der Zahnradkomponenten können während des Fügevorgangs die jeweiligen Komponenten über ein sogenanntes Master Gear, das konventionell hergestellt wurde, oder eine entsprechende Vorrichtung gegeneinander positioniert werden. Die Verzahnungsbreite jeder Verzahnungshälfte könnte geringer sein als beim zu fertigenden Zahnrad. Dadurch sind für die Fertigung des jeweiligen Zahnkranzes Fertigungsverfahren anwendbar die ansonsten aufgrund eines für den Werkzeugauslauf erforderlichen Raumes nicht anwendbar wären, da der entsprechende Werkzeugauslauf in getrenntem Zustand der Bauteilkomponenten zur Verfügung steht. Eine Vorrichtung zur Positionierung der Bauteilkomponenten kann in vorteilhafter Weise aus zwei Teilvorrichtungen bestehen, die wiederum eine Aufnahme für die Zahnräder am Innendurchmesser und einen hochauflösenden Winkel-Encoder sowie einer Präzisionssteuerung umfassen, die dann über Einmessung der Verzahnung eine entsprechende Positionierung der beiden Verzahnungshälften zueinander herstellen kann.

### Kurzbeschreibung der Figuren

Weitere Einzelheiten und Merkmale der Erfindung ergeben sich aus der nachfolgenden Beschreibung in Verbindung mit der Zeichnung. Es zeigt:
- **Figur 1**: eine Axialschnittdarstellung zur Erläuterung des Aufbaues einer erfindungsgemäßen Zahnradeinrichtung gemäß einer ersten Ausführungsform der Erfindung;
- **Figur 2**: eine Axialschnittdarstellung zur Erläuterung des Aufbaues einer erfindungsgemäßen Zahnradeinrichtung gemäß einer zweiten Ausführungsform der Erfindung mit einer mehrteiligen Kernstruktur sowie bei jeder einen Zahnkranz tragenden Bauteilkomponente als zylindrische Innenumfangsfläche gestalteten Fügefläche;
- **Figur 3**: eine Axialschnittdarstellung zur Erläuterung des Aufbaues einer erfindungsgemäßen Zahnradeinrichtung gemäß einer dritten Ausführungsform der Erfindung mit axial aneinander gefügten und in definiert positioniertem Zustand stofflich verbundenen Bauteilkomponenten;
- **Figur 4**: ein Flussdiagramm zur Erläuterung des Ablaufes des erfindungsgemäßen Fertigungsverfahrens;
- **Figur 5**: eine Skizze zur Erläuterung des Aufbaus einer erfindungsgemäßen Positioniervorrichtung;
- **Figur 6**: eine vereinfachte Axialschnittdarstellung durch ein Triebwerk, zur Veranschaulichung eines bevorzugten Anwendungsfalles der erfindungsgemäßen Zahnradeinrichtung.

### Ausführliche Beschreibung der Figuren

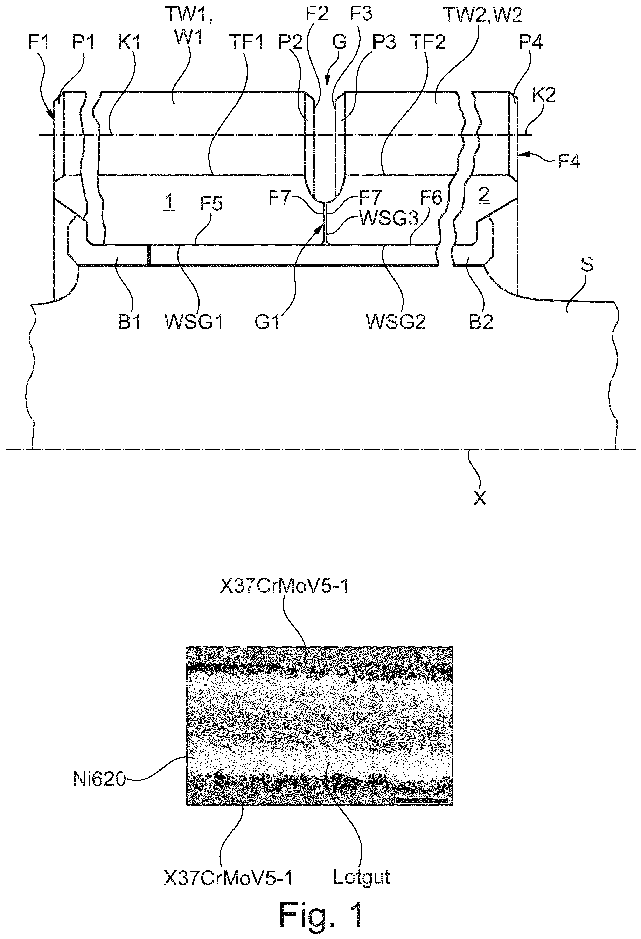

Die Darstellung nach Figur 1 zeigt eine erfindungsgemäße Zahnradeinrichtung mit einer ersten Bauteilkomponente 1, die einen schräg verzahnten ersten Zahnkranz W1 bildet, der sich axial zwischen einer ersten Stirnseite F1 und einer zweiten Stirnseite F2 erstreckt und einer zweiten Bauteilkomponente 2, die einen schräg verzahnten zweiten Zahnkranz W2 bildet, der sich axial zwischen einer dritten und einer vierten Stirnseite F3, F4 erstreckt. Bei dieser Zahnradeinrichtung sind die erste Bauteilkomponente 1 und die zweite Bauteilkomponente 2 zu einer Zahnradachse X gleichachsig angeordnet und die zweite Stirnseite F2 des ersten Zahnkranzes W1 und die dritte Stirnseite F3 des zweiten Zahnkranzes W2 sind einander zugewandt.

Der erste Zahnkranz W1 und der zweite Zahnkranz W2 weisen gleiche Kopfkreisdurchmesser auf. Die beiden Bauteilkomponenten 1, 2 sind miteinander drehfest gekoppelt und axial zueinander festgelegt. Die Einbindung wenigstens einer der beiden Bauteilkomponenten 1, 2 in die Zahnradeinrichtung ist durch eine Adhäsions- und/oder Kohäsionsverbindungszone bewerkstelligt, die sich im Bereich einer Verbindungsfläche F5, F6, F7 erstreckt die durch wenigstens eine der Bauteilkomponenten 1, 2 bereitgestellt ist.

Bei der hier gezeigten Ausführungsform sind die beiden Bauteilkomponenten 1, 2 unter Ausbildung der Verbindungszone WSG3 entlang der Verbindungsflächen F7 miteinander stofflich verbunden. Die Verbindungsflächen F7 bilden hier jeweils eine zur Zahnradachse X quer ausgerichtete Radialfläche und sind unter Belassung eines Spaltes G1 einander zugewandt. Dieser Spalt wird von einem Lot- oder Klebematerial ausgefüllt.

Weiterhin sind bei der hier gezeigten Ausführungsform die beiden Bauteilkomponenten auch über Verbindungsflächen F5, F6 in die Zahnradeinrichtung eingebunden die hier als zur Zahnradachse X konzentrische Umfangsflächen ausgeführt sind. Die Verbindungsflächen F5, F6 bilden im Zusammenspiel mit einer Buchsenstruktur B1, B2 einen Spaltraum, der hier von einem Lotmaterial ausgefüllt ist. Bei dem hier vorgesehenen Lotmaterial handelt es sich um ein Hochtemperaturlotmaterial insbesondere Ni620. Der Gefügeaufbau der der Verbindungszone ist hier beispielhaft vergrößert dargestellt. Jenseits des vom Lotmaterial ausgefüllten Spaltbereiches erstrecken sich in den Bauteilkomponenten 1, 2 sowie in der Buchsenstruktur B1, B2 Diffusionszonen. Die Buchsenstruktur B1, B2 besteht hier beispielhaft aus zwei axial gefügten Buchsen B1, B2 welche wechselweise ineinander vordringende Finger aufweisen und in ihrer Gesamtheit eine zylindrische Außenumfangsfläche bilden.

Bei der hier gezeigten Ausführungsform der Zahnradeinrichtung bilden die beiden Bauteilkomponenten 1, 2 im Bereich der Verbindungsflächen F7 einen von einem Lotmaterial ausgefüllten Spalt. Es ist auch möglich den Aufbau konstruktiv so zu gestalten, dass sich die beiden Bauteilkomponenten 1, 2 im Bereich der Flächen F7 direkt kontaktieren, so dass durch die Flächen F7 der beiden Bauteilkomponenten 1, 2 die axiale Relativ- oder Endposition der beiden Zahnkränze W1, W2 festgelegt ist.

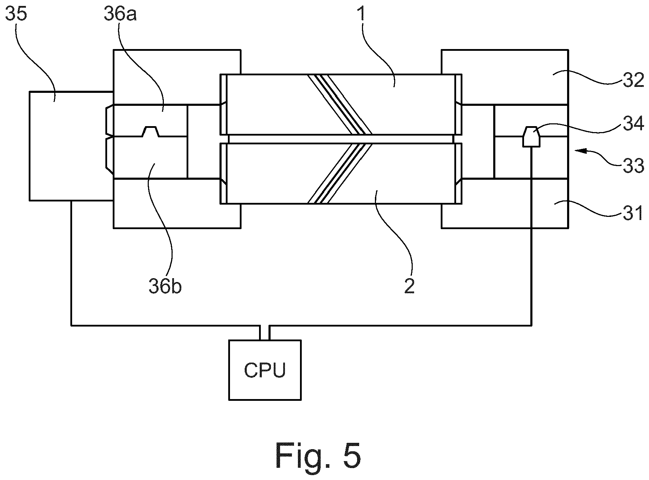

Die Festlegung wenigstens einer der Bauteilkomponenten 1, 2 in der Zahnradeinrichtung wird bewerkstelligt, indem die beiden Zahnradstrukturabschnitte 1, 2 durch eine in Verbindung mit Figur 5 noch näher beschriebene Positioniervorrichtung zueinander positioniert werden und in der so vorgegebenen Position miteinander verschweißt, verlötet und/oder verklebt sind. In der sich nach Schaffung dieser stofflichen Verbindung ergebenden Stellung der Zahnkränze TW1, TW2 erfolgt eine Nachbearbeitung der Zahnkränze W1, W2 im Bereich der einander zugewandten Stirnseiten F2, F3.

Diese Nachbearbeitung erfolgt insbesondere derart, dass zwischen den einander zugewandten Stirnendflächen F2, F3 der Zähne der Zahnkränze ein Spalt G freigelegt wird, wobei die die Axialposition des Spaltes G nach Maßgabe der Umfangsposition der Zahnkränze W1, W2 zueinander festgelegt wird. Die axiale Mitte des Spaltes G befindet sich dann in der Schnittebene der virtuellen Verlängerung der Verzahnung TW1, TW2.

Die Zahnradeinrichtung kann weiterhin auch im Bereich der einander abgewandten Stirnflächen F1, F4 der Bauteilkomponenten 1, 2 in vorteilhafter Weise nachgearbeitet, insbesondere überschliffen werden. Die Zahnkränze W1, W2 sind im Bereich der Stirnenden ihrer Verzahnung TW1, TW2 mit Fasen P1, P2, P3, P4 versehen, diese Fasen P1, P2, P3, P4 sind derart ausgelegt, dass diese bei einer übliche Toleranzen berücksichtigenden Nachbearbeitung Stirnseiten F1, F2, F3, F4 noch vorhanden sind. Die Zahnkränze weisen gleiche Zahnquerschnitte und gleiche Fußkreisdurchmesser TF1, TF2 auf.

Die axial zusammengesetzte Buchsenstruktur B1, B2 wird nach der Ausbildung der Verbindungszonen WSG1, WSG2 und WSG3 innenseitig nachgearbeitet. Nach dieser Nachbearbeitung erfolgt eine Finishing-Bearbeitung der zu einer Baugruppe starr zusammengefügten Zahnkränze W1, W2. Diese Baugruppe wird dann auf einen Zapfen S aufgeschoben und erforderlichenfalls auf diesem fixiert.

Die beiden Verzahnungen TW1, TW2 haben gleiche Teilkreisdurchmesser K1, K2 und identische Zahnquerschnitte. Die Verzahnungen TW1, TW2 sind Schrägverzahnungen und derart ausgerichtet, dass diese eine sog Herrinbonegear-Verzahnung bilden.

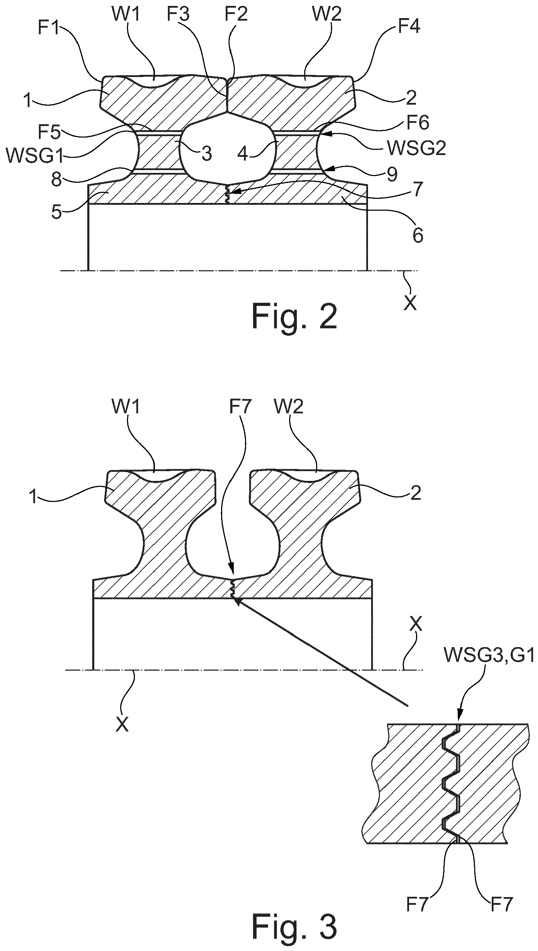

Die Darstellung nach Figur 2 zeigt stark vereinfacht ein Ausführungsbeispiel einer erfindungsgemäßen Zahnradeinrichtung mit einer ersten Bauteilkomponente 1, die einen schräg verzahnten ersten Zahnkranz W1 bildet, der sich axial zwischen einer ersten Stirnseite F1 und einer zweiten Stirnseite F2 erstreckt und einer zweiten Bauteilkomponente 2, die einen schräg verzahnten zweiten Zahnkranz W2 bildet, der sich axial zwischen einer dritten und einer vierten Stirnseite F3, F4 erstreckt. Bei dieser Zahnradeinrichtung sind die erste Bauteilkomponente 1 und die zweite Bauteilkomponente 2 zu einer Zahnradachse X gleichachsig angeordnet und die zweite Stirnseite F2 des ersten Zahnkranzes W1 und die dritte Stirnseite F3 des zweiten Zahnkranzes W2 sind einander zugewandt.

Bei dieser zweiten Ausführungsform weisen der erste Zahnkranz W1 und der zweite Zahnkranz W2 ebenfalls gleiche Kopfkreisdurchmesser und Teilkreisdurchmesser auf. Die beiden Bauteilkomponenten 1, 2 sind miteinander drehfest gekoppelt und axial zueinander festgelegt. Die Einbindung wenigstens einer der beiden Bauteilkomponenten 1, 2 in die Zahnradeinrichtung ist auch hier durch eine Adhäsions- und/oder Kohäsionsverbindungszone WSG1, WSG2 bewerkstelligt, die sich im Bereich der Verbindungsflächen F5 und F6 erstreckt die durch die beiden Bauteilkomponenten 1, 2 bereitgestellt werden.

Bei der hier gezeigten Ausführungsform sind die beiden Bauteilkomponenten 1, 2 unter Kontaktierung der Stirnflächen F2, F3 axial positioniert. Die beiden Bauteilkomponenten 1, 2 der Zahnradeinrichtung sitzen auf Ringelementen 3, 4 und sind mit diesen über die Verbindungszonen WSG1, WSG2 stofflich verbunden. Die Ringelemente 3, 4 sitzen über zylindrische Fügeflächen auf Buchsen 5, 6. Die Ringelemente 3, 4 sind mit den Buchsen 5, 6 ebenfalls über Verbindungsstellen 8, 9 stofflich verbunden. Auch die beiden Buchsen 5, 6 sind miteinander über eine Verbindungszone 7 stofflich verbunden. Die Bauteilkomponenten 1, 2, die Ringelemente 3,4 sowie die beiden Buchsen 5, 6 werden durch eine Positioniereinrichtung in Positionen gespannt, die optimale Spalte für die Ausbildung der Verbindungszonen WSG1, WSG2, 7, 8, 9 und optimale Gesamtpositionen dieser Komponenten zueinander sicherstellen

Die Darstellung nach Figur 3 zeigt ein drittes Ausführungsbeispiel einer erfindungsgemäßen Zahnradeinrichtung. Auch hier weisen der erste Zahnkranz W1 und der zweite Zahnkranz W2 gleiche Kopfkreisdurchmesser auf. Die beiden Bauteilkomponenten 1, 2 sind miteinander drehfest gekoppelt und axial zueinander festgelegt. Die Zusammenfassung der beiden Bauteilkomponenten 1, 2 zu einer zweireihigen Zahnradeinrichtung ist durch eine Adhäsions- und/oder Kohäsionsverbindungszone WSG3 bewerkstelligt, die sich im Bereich der Verbindungsflächen F7 erstreckt die durch die beiden Bauteilkomponenten 1, 2 bereitgestellt werden.

Bei der hier gezeigten Ausführungsform sind die beiden Bauteilkomponenten 1, 2 unter Ausbildung der Verbindungszone WSG3 entlang der Verbindungsflächen F7 miteinander stofflich verbunden. Die Verbindungsflächen F7 bilden hier jeweils eine zur Zahnradachse X quer ausgerichtete Radialfläche und sind unter Belassung eines Spaltes G1 einander zugewandt. Dieser Spalt wird von einem Lot- oder Klebematerial ausgefüllt.

Die Verbindungsflächen F7 können wie in der Skizze dargestellt derart komplementär profiliert ausgebildet sein, dass sich im Rahmen des Zusammenfügens der Bauteilkomponenten 1, 2 eine Koppelung der Bauteilkomponenten 1, 2 ergibt durch welche die beiden Bauteilkomponenten zur Zentralachse X der Zahnradeinrichtung gleichachsig ausgerichtet sind, d.h. die Achsen der Zahnkränze W1, W2 mit der Zentralachse X der Zahnradeinrichtung übereinkommen. Die Bauteilkomponenten 1, 2 werden vor der Ausbildung der Verbindungszone WSG3 sowie im Rahmen der Ausbildung derselben definiert positioniert, so dass sich unter Vorhaltung einer optimierten Ausgangsposition der Bauteilkomponenten 1, 2 eine optimale Spaltgeometrie für den Spalt G1 ergibt.

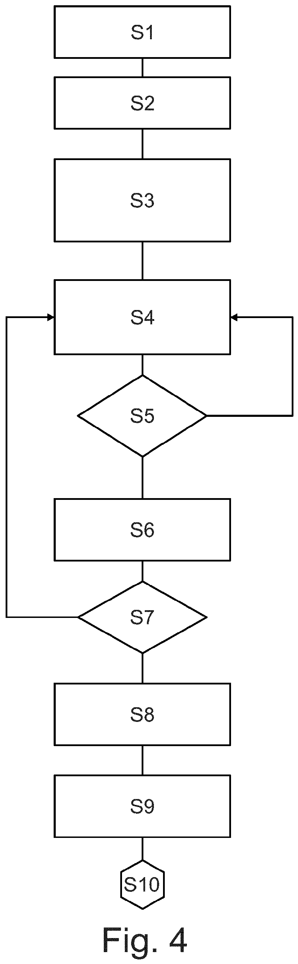

Die Darstellung nach Figur 4 veranschaulicht den Ablauf eines erfindungsgemäßen Verfahrens zur Herstellung einer Zahnradeinrichtung mit einem ersten und einem zweiten wie vorangehend in Verbindung mit den Figuren 1 bis 3 beschriebenen Zahnkranz.

Nach diesem Verfahren erfolgt in dem Schritt S1 das Bereitstellen der ersten Bauteilkomponente, die den ersten Zahnkranz bildet, der sich axial zwischen einer ersten Stirnseite und einer zweiten Stirnseite erstreckt. Dieser Zahnkranz ist nahezu auf Endmaß fertig bearbeitet.

Im Schritt S2 erfolgt das Bereitstellen der zweiten Bauteilkomponente, die den zweiten Zahnkranz K2 bildet, der sich axial zwischen einer dritten und einer vierten Stirnseite F3, F4 erstreckt. Dieser zweite Zahnkranz ist ebenfalls nahezu auf Endmaß fertig bearbeitet.

Im Schritt S3 werden die beiden Bauteilkomponenten in eine Positioniervorrichtung eingebracht, so dass die zweite Stirnseite des ersten Zahnkranzes und die dritte Stirnseite des zweiten Zahnkranzes einander zugewandt sind.

In der Positioniereinrichtung werden die beiden Bauteilkomponenten im Rahmen des vierten Verfahrensschrittes S4 jeweils für sich aufgegriffen und gespannt. Die so aufgegriffenen Bauteilkomponenten werden über einen Präzisionsstelltrieb derart angeordnet und zueinander positioniert dass diese mit ihren jeweiligen Zahnkranzachsen auf einer gemeinsamen zentralen Zahnradachse liegen.

Im Schritt S5 wird die Relativposition der beiden Bauteilkomponenten gemessen und mit einem Positionskriterium verglichen. Nach Maßgabe des Vergleichsergebnisses erfolgt eine Korrektur der Relativposition. Hierzu werden die in der Positioniereinrichtung aufgegriffenen Bauteilkomponenten in der Positioniervorrichtung über einen Präzisionsstelltrieb derart angeordnet und zueinander positioniert bis diese mit ihren jeweiligen Zahnkranzachsen auf einer gemeinsamen zentralen Zahnradachse liegen.

Im Verfahrensschritt S6 erfolgt ein Einbinden der beiden Bauteilkomponenten in die Zahnradeinrichtung derart, dass diese drehfest miteinander verbunden und axial zueinander festgelegt sind, wobei das Einbinden wenigstens einer der beiden Bauteilkomponenten in die Zahnradeinrichtung bewerkstelligt wird durch Ausbildung einer stofflichen Verbindungzone die sich entlang einer Verbindungsfläche erstreckt, die durch wenigstens eine der beiden Bauteilkomponenten bereitgestellt wird. Diese stoffliche Verbindung wird in positionsüberwacht gespanntem Zustand durch Ausbildung einer Schweißverbindungzone, einer Lötverbindungszone und/oder einer Klebeverbindungszone bewerkstelligt. Die Schweißverbindungzone, die Lötverbindungszone und/oder die Klebeverbindungszone wird hierbei derart ausgebildet, dass sich diese zumindest partiell um die Zahnradachse herum erstreckt und dabei mit einem Verbindungszoneninnenbereich der Zahnradachse zugewandt ist (vgl. Fig.1 und Fig. 2). Diese Verbindungszone und/oder, dass die Schweißverbindungzone, die Lötverbindungszone und/oder die Klebeverbindungszone kann auch bei entsprechender Gestaltung der Bauteilkomponenten auch derart ausgebildet werden, dass sich diese zumindest partiell um die Zahnradachse herum erstreckt und dabei primär quer zu der Zahnradachse ausgerichtet ist (Vgl. Fig. 3).

Durch die Positionierung der beiden Bauteilkomponenten kann Rahmen der Verfahrensschritte S3 und S4 eine Ausrichtungsvorhaltung der Bauteilkomponenten eingestellt werden, durch welche einer durch die Verbindungstechnik verursachten Wirkung auf die Relativposition der Bauteilkomponenten für die Erlangung der Endposition der Bauteilkomponenten Rechnung getragen wird. Zur Ermittlung geeigneter Ausrichtungsvorhaltungen kann im Verfahrensschritt S7 die Relativposition der Bauteile nochmals gemessen werden. Soweit die gemessene Relativposition ein Toleranzkriterium erfüllt kann die soweit gefertigte Zahnradeinrichtung im Rahmen des Verfahrensschrittes S8 nach hinreichender Tragfähigkeit der stofflichen Verbindung die Zahnradeinrichtung aus der Positioniervorrichtung entnommen werden.

Die so geschaffene Zahnradeinrichtung kann unter Rückgriffnahme auf die im Verfahrensschritt S7 gewonnenen Messdaten einer Nachbearbeitung im Nachbearbeitungsschritt S9 unterzogen werden. Die Nachbearbeitung der Zahnradeinrichtung nach Ausbildung der stofflichen Verbindung kann eine materialabtragende Behandlung beinhalten. Diese kann mit einer Abrasivstruktur bewerkstelligt werden.

Bei dieser Abrasivstruktur kann es sich um einen in der Gestalt eines Zahnrades gefertigten Schleifkörper handeln. Dieser Schleifkörper kann insbesondere im Wege eines additiven Fertigungsverfahrens, insbesondere einem 3D-Druck aus einem Werkstoff gefertigt werden, der bereits Schleifkörper beinhaltet, oder mit Schleifkörpern, insbesondere Korund oder Diamantschleifkörpern beschichtet wird.

Die Geometrie dieses Schleifkörpers kann der Geometrie eines Zahnrades entsprechen mit welchem die Zahnradeinrichtung nach Einbau derselben in eine Getriebeeinrichtung zusammenarbeitet. Hierdurch können optimale Oberflächengeometrien für die Zahnradeinrichtung erreicht werden.

Die Geometrie des Schleifkörpers kann auch insbesondere hinsichtlich einer Profilverschiebung von der Geometrie eines Gegenrades abweichen, so dass eine Zahngeometrie erreicht wird, die tribologisch weitere Vorteile gegenüber einer streng komplementären Paarung von Zahngeometrien bietet.

Der Schleifprozess kann abgewickelt werden, indem die Zahnradeinrichtung und der Schleifkörper in gegenseitigem Verzahnungseingriff jeweils drehbar gelagert und in Drehung versetzt werden. Der Schleifkörper und die Zahnradeinrichtung können hierbei als verspanntes Getriebe und mit wechselnder Dreh- oder Verspannungsrichtung betrieben werden. Der Schleifprozess kann bis zur Erlangung eines Geometriekriteriums oder eines Oberflächenkriteriums betrieben werden.

Die Fügung der Bauteilkomponenten erfolgt vorzugsweise derart, dass wenigstens eine der Bauteilkomponenten über eine Formschlussgeometrie, insbesondere eine Verzahnung oder eine Gleichdickengeometrie oder über Passfläche, eine Kegel- oder gewölbte Gürtelfläche, insbesondere Kugelgürtelfläche in die Zahnradeinrichtung eingebunden wird.

Die beiden Zahnradstrukturabschnitte können im Rahmen des Anordnens derselben radial durch Fügeflächen positioniert werden, die in der Zahnradeinrichtung zumindest zunächst bereitgestellt werden.

Zur Positionierung der Zahnradstrukturabschnitte zueinander können Fügeflächen herangezogen werden, die zumindest abschnittsweise in der im Rahmen der Einbindung gebildeten adhäsiven und/oder kohäsiven Verbindungszone verlaufen.

Im Rahmen der Verfahrensschritte S3 kann ein Flussmittel, ein Lötmittel, ein Bondmedium, ein Diffusionsmedium, und/oder ein Klebemittel bereits vor dem Fügen der Bauteilkomponenten im Bereich der dann die Verbindungsfläche bildenden Bauteilbereiche auf diese Komponenten aufgetragen appliziert oder auf diesen bereitgehalten werden.

Alternativ hierzu kann erst im Rahmen des Verfahrensschrittes S5 die stoffliche Verbindung durch eine Schweißmaterialzugabe, ein Bondmedium, ein Diffusionsmedium, ein Flussmittel, ein Lötmittel und/oder ein Klebemittel in den die Verbindungszone bildenden Bereich eingebracht werden.

Die unter Fügung der beiden Zahnradstrukturabschnitte gebildete Zahnradeinrichtung wird wie oben bereits angegeben im Verfahrensschritt S9 einer Nachbearbeitung unterzogen. Hierbei kann nach dem Fügen der Bauteilkomponenten eine messtechnisch bestimmte Abweichung der Geometrie Verzahnung von der Sollposition erfasst und mittels eines abtragenden Feinbearbeitungsverfahrens (z.B. Zahnradhonen, Fräsen, Drehen, Schleifen) korrigiert werden.

Diese Bearbeitung kann an einem oder beiden der Zahnkränze durchgeführt werden, wobei dann der jeweils andere Zahnkranz dabei als Referenz dient.

Die Darstellung nach Figur 5 veranschaulicht beispielhaft und abstrahiert den Aufbau einer erfindungsgemäßen Positioniervorrichtung einschließlich der bereits in diese eingesetzten Bauteilkomponenten 1, 2 der Zahnradeinrichtung.

Die Positioniervorrichtung ist derart gestaltet, dass diese die beiden Bauteilkomponenten in einer Ausrichtung positioniert, in welcher deren Mittelachsen vertikal verlaufen. Die in dieser Darstellung untere Bauteilkomponente 2 wird in einem unteren Spannwerkzeug 31 gespannt. Das untere Spannwerkzeug 31 bildet eine Auflagefläche auf welcher eine Stirnseite (vgl. Fig. 1 Stirnseite F4) aufliegt. Diese Auflagefläche ist als Präzisionsauflagefläche gestaltet und legt die Ausrichtung der Mittelachse der zweiten Bauteilkomponente 2 in der Positioniervorrichtung fest. Das untere Spannwerkzeug 31 umfasst weiterhin eine Präzisions-Eingriffsstruktur die in die Verzahnung des Zahnkranzes der zweiten Bauteilkomponente 2 mit hoher Umfangssteifigkeit eingreift. Die zweite Bauteilkomponente 2 ist in dem unteren Spannwerkzeug 31 hochsteif fixiert.

Das obere Spannwerkzeug 32 bildet eine Anlagefläche an welcher eine Stirnseite (vgl. Fig. 1 Stirnseite F1) anliegt. Diese Anlagefläche ist wiederum als Präzisionsauflagefläche gestaltet und legt die Ausrichtung der Mittelachse der ersten Bauteilkomponente 1 in der Positioniervorrichtung fest. Das obere Spannwerkzeug 32 umfasst ebenfalls eine Präzisions-Eingriffsstruktur die in die Verzahnung des Zahnkranzes der ersten Bauteilkomponente 1 mit hoher Umfangssteifigkeit eingreift. Die erste Bauteilkomponente 1 ist damit in dem oberen Spannwerkzeug hochsteif fixiert.

Das untere Spannwerkzeug 31 und das obere Spannwerkzeug 32 sind über eine Präzisionsstelltriebeinrichtung 35, 36a, 36b miteinander derart gekoppelt, dass die beiden Spannwerkzeuge 31, 32 definiert zueinander verlagerbar sind. Bei diesem Ausführungsbeispiel können die beiden Spannwerkzeuge 31, 32 sowohl in Umfangsrichtung, d.h. um die Zentralachsen der beiden Bauteilkomponenten 1, 2 sowie auch in Axialrichtung dieser Zentralachsen definiert verlagert werden. Die Absolutpositionen der Spannwerkzeuge 31, 32 werden durch eine Messanordnung 33 erfasst. Diese Messanordnung umfasst hier eine optische Messeinrichtung 34.

Die Präzisionsstelltriebeinrichtung 35, 36a, 36b wird über eine Steuereinrichtung CPU unter Berücksichtigung der über die Messanordnung 33 erfassten Signale angesteuert.

Über die derart aufgebaute Positioniervorrichtung werden die Bauteilkomponenten gespannt und definiert zueinander ausgerichtet. Die Bauteilkomponenten 1, 2 werden unter Ausbildung einer stofflichen Verbindung zu einer Zahnradeinrichtung zusammengefasst. Die Ausbildung der stofflichen Verbindung erfolgt in einer Relativstellung der Bauteilkomponenten 1, 2 die durch die Positioniereinrichtung eingestellt ist. Vorzugsweise erfolgt die Ausbildung der stofflichen Verbindung in einem Zustand, in welchem die Bauteilkomponenten 1, 2 in der Positioniereinrichtung gehalten sind. Über die Positioniereinrichtung kann auch die Relativposition der nunmehr verbundenen Bauteilkomponenten 1, 2 zueinander erfasst und bewertet werden.

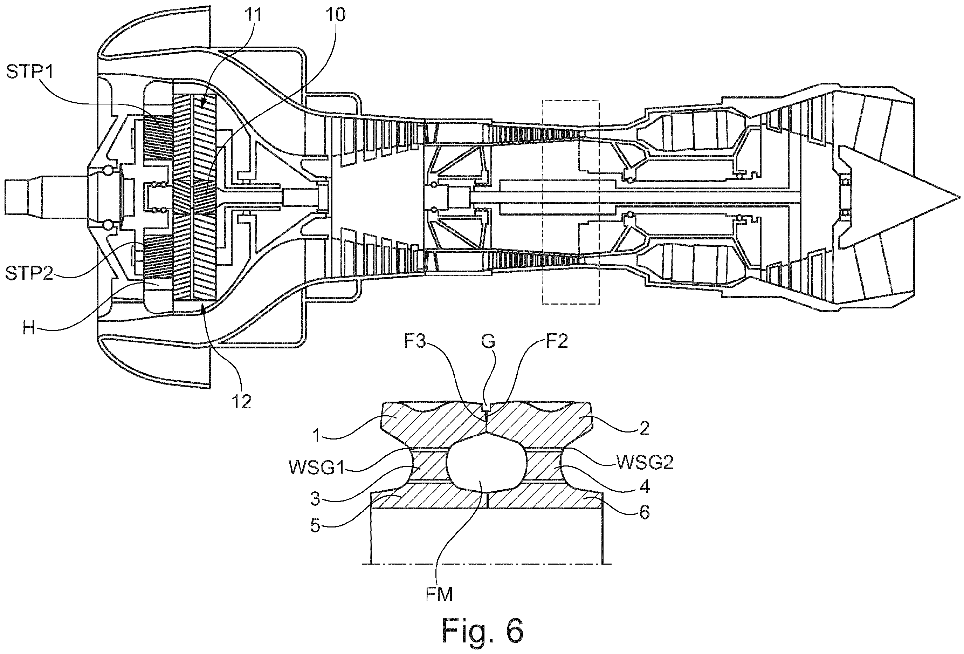

Die Darstellung nach Figur 6 zeigt vereinfacht ein Triebwerk, mit einem an dieses angebundenen Planetengetriebe. Das Planetengetriebe umfasst ein Sonnenrad 10 das als zweireihig schräg verzahntes Stirnrad ausgebildet ist. Weiterhin umfasst das Planetengetriebe Stufenplaneten STP1, STP2 welche sich aus einfach schrägverzahnten Stirnradzapfen, sowie zweireihig schräg verzahnten Zahnradeinrichtungen 11, 12 zusammensetzen. Die Stirnradzapfen greifen radial von innen her in ein Hohlrad H ein. Die Stirnradzapfen und die die darauf sitzenden Zahnradeinrichtungen 11, 12 sind in einem Planetenträger gelagert. Über den Planetenträger wird der Leistungsabgriff aus dem Planetengetriebe bewerkstelligt.

Die Zahnradeinrichtungen 11, 12 sind aus zwei Bauteilkomponenten 1, 2 zusammengesetzt. Die Bauteilkomponenten 1, 2 bilden zwei schräg verzahnte Zahnkränze und stehen axial über ihre Stirnflächen F2, F3 aneinander an. Zwischen den beiden Zahnkränzen verläuft ein Umfangsspalt G. Bauteilkomponenten 1, 2 sitzen auf Ringkörpern 3, 4 sowie Buchsen 5, 6. Die Bauteilkomponenten 1, 2, die Ringkörper 3, 4, sowie die Buchsen 5, 6 sind als zunächst separate Bauteile gefertigt und im Rahmen eines Fügeprozesses miteinander stofflich verbunden und bilden in diesem Zustand eine körperliche Einheit. In einem radial innerhalb der der Bauteilkomponenten 1, 2 sowie axial zwischen den Ringkörpern 3, 4 liegenden Raumbereich sitz ein Füllkörper FM der aus einem Leichtwerkstoff insbesondere einer Aluminiumlegierung oder einer Titanlegierung gefertigt ist. Dieser Füllkörper FM ist ebenfalls über eine hier nicht weiter dargestellte stoffliche Verbindung in die Zahnradeinrichtung eingebunden. Die zweireihig schräg verzahnte und mit dem Sonnenrad 10 in Eingriff stehende Zahnradeinrichtung sitzt torsionsfest auf einem den Stufenplaneten STP1 bzw. Stufenplaneten STP2 tragenden Wellenzapfen. Die hier vereinfacht dargestellten Fügeflächen der zusammengefügten Bauteile können so gestaltet sein, dass diese die in den Verbindungszonen primär wirksamen Kräfte formschlüssig übertragen. Die Verbindungszone dient damit primär dem Bauteilzusammenhalt und die Betriebskräfte innerhalb des Bauteils werden über Eingriffsstrukturen, ggf. unter vorrangiger Druckbelastung des in den Fügezonen vorhandenen Verbindungswerkstoffes übertragen.

Durch das erfindungsgemäße Konzept ergibt sich ein wirtschaftliches Einsparungspotential indem die Zahnkränze der Zahnradeinrichtung effizient als zunächst einzelne Bauteile gefertigt werden können und hinsichtlich der Werkzeugführung keine Einschränkungen durch Nachbargeometrien bestehen. Zudem kann durch dieses Konzept die Verzahnung eine geringe axiale Erstreckung aufweisen, da die beiden Verzahnungen entweder unmittelbar aneinander anschließen oder unter einem lediglich geringen Abstand voneinander beabstandet sind.

Somit kann die Erfindung in vorteilhaften Weiterbildungen vorsehen, dass die Bauteilkomponenten, insbesondere die beiden Bauteilkomponenten, aneinander anschließend angeordnet bzw. eingebunden werden bzw. sind. Dies bezieht sich sowohl auf die erfindungsgemäße Zahnradeinrichtung als auch auf das erfindungsgemäße Verfahren. Vorteilhaft kann überdies vorgesehen sein, dass eine stoffliche Verbindungzone zwischen den beiden Bauteilkomponenten besteht bzw. ausgebildet wird. So kann eine besonders stabile Struktur bzw. Zahnradeinrichtung mit vergrößerter Verzahnungsfläche bereitgestellt werden. Möglich kann auch sein, dass die Bauteilkomponenten, insbesondere die beiden Bauteilkomponenten, voneinander beabstandet angeordnet bzw. eingebunden werden bzw. sind. Dies bezieht sich sowohl auf die erfindungsgemäße Zahnradeinrichtung als auch auf das erfindungsgemäße Verfahren. Vorteilhaft kann überdies vorgesehen sein, dass keine stoffliche Verbindungzone zwischen den beiden Bauteilkomponenten ausgebildet wird bzw. ist. Somit können beide Bauteilkomponenten mit ihren jeweils einander zugewandten Stirnseiten berührend eingebunden werden bzw. sein.

Eine besonders bevorzugte Weiterbildungen der Erfindung kann daher vorsehen, die zweite Stirnseite des ersten Zahnkranzes und die dritte Stirnseite des zweiten Zahnkranzes beabstandet angeordnet sind. Die zweite Stirnseite des ersten Zahnkranzes und die dritte Stirnseite des zweiten Zahnkranzes sind zueinander berührungsfrei angeordnet. Dazu kann vorgesehen sein, dass zwischen der zweiten Stirnseite und der dritten Stirnseite ein Abstandsbereich ausgebildet ist. Dies kann Schmiereigenschaften der Zahnradeinrichtung positiv beeinflussen.

In einer weiteren vorteilhaften Weiterbildung kann die Erfindung vorsehen, dass beide Bauteilkomponenten mit ihren jeweils einander zugewandten Stirnseiten berührungsfrei eingebunden werden bzw. sind. Die zweite Stirnseite des ersten Zahnkranzes und die dritte Stirnseite des zweiten Zahnkranzes sind vorzugsweise berührungsfrei zueinander angeordnet. Eine derartige beabstandete Anordnung der Bauteilkomponenten kann beispielsweise eine verbesserte Schmierung ermöglichen und sich insofern vorteilhaft auf die Langlebigkeit der Zahnradeinrichtung auswirken.

Vorgesehen sein kann in einer vorteilhaften Weiterbildung der Erfindung auch, dass die zweite Stirnseite des ersten Zahnkranzes und die dritte Stirnseite des zweiten Zahnkranzes sich berührend angeordnet sind. Zwischen der zweiten Stirnseite des ersten Zahnkranzes und der dritten Stirnseite des zweiten Zahnkranzes ist kein Abstandsbereich vorgesehen. Die zweite Stirnseite und die dritte Stirnseite sind vorzugsweise auf Stoß angeordnet.

Es versteht sich, dass die obige detaillierte Beschreibung und die Zeichnungen zwar mehrere bestimmte exemplarische Ausgestaltungen der Erfindung beschreibt, dass sie aber nur zur Veranschaulichung gedacht sind und nicht als den Umfang der Erfindung einschränkend ausgelegt werden sollen. Diverse Abwandlungen der beschriebenen Ausgestaltung sind möglich, ohne den Rahmen der nachfolgenden Ansprüche und deren Äquivalenzbereich zu verlassen. Insbesondere gehen aus dieser Beschreibung und den Figuren auch Merkmale von Ausführungsbeispielen hervor, die nicht in den Ansprüchen erwähnt sind. Solche Merkmale können auch in anderen als den hier spezifisch offenbarten Kombinationen auftreten. Die Tatsache, dass mehrere solcher Merkmale in einem gleichen Satz oder in einer anderen Art von Textzusammenhang miteinander erwähnt sind, rechtfertigt daher nicht den Schluss, dass sie nur in der spezifisch offenbarten Kombination auftreten können. Stattdessen ist grundsätzlich davon auszugehen, dass von mehreren solchen Merkmalen auch einzelne weggelassen oder abgewandelt werden können, sofern dies die Funktionsfähigkeit der Erfindung nicht in Frage stellt. Die Verfahrensschritte beschreiben Maßnahmen, nach welchen eine Zahnradeinrichtung aus mehreren Komponenten aufgebaut wird. Diese Verfahrensschritte werden über eine Steuereinrichtung koordiniert die ebenfalls Gegenstand der Erfindung bildet.

### Bezugszeichenverzeichnis

- 1: erste Bauteilkomponente
- 2: zweite Bauteilkomponente
- 3: Ringelemente/ Ringkörper
- 4: Ringelemente/ Ringkörper
- 5: Buchse
- 6: Buchse
- 7: Verbindungszone
- 10: Sonnenrad
- 11: Zahnradeinrichtung
- 12: Zahnradeinrichtung
- 31: Unteres Spannwerkzeug
- 32: Oberes Spannwerkzeug
- 33: Messanordnung
- 34: Optische Messeinrichtung
- 35, 36a, 36b: Präzisionsstelltriebeinrichtung
- B1: Buchsenstruktur
- B2: Buchenstruktur
- CPU: Steuerung
- FM: Füllkörper, Leichtmaterialbauteil
- F1: erste Stirnseite
- F2: zweite Stirnseite
- F3: dritte Stirnseite
- F4: vierte Stirnseite
- F5: Verbindungsfläche
- F6: Verbindungsfläche
- F7: Verbindungsfläche
- G: Spalt, Umfangsspalt, Verzahnungsspalt
- G1: (Lot-) Spalt
- H: Hohlrad
- K1: Teilkreis
- K2: Teilkreis
- P1 ... P4: Fasen
- STP1: Stufenplanet
- STP2: Stufenplanet
- S1-S9: Verfahrensschritte
- S1: Bereitstellung erste Bauteilkomponente
- S2: Bereitstellung zweite Bauteilkomponente
- S3: Einbringung in Positioniervorrichtung
- S4: Spannen Positionieren
- S5: Messen/Vergleichen
- S6: Einbinden / stofflich Verbinden
- S7: Messen /Vergleichen
- S8: Herausgeben
- S9: Finishing
- "10": ENDE (S10)
- TF1: Fußkreis
- TF2: Fußkreis
- TW1: Verzahnung
- TW2: Verzahnung
- W1: erster Zahnkranz
- W2: zweiter Zahnkranzes
- WSG1: Verbindungszone (Welding Solder Glue)
- WSG2: Verbindungszone
- WSG3: Verbindungszone
- X: Zahnradachse

## Patentansprüche

1. Verfahren zur Herstellung einer Zahnradeinrichtung mit einem ersten und einem zweiten Zahnkranz (K1, K2), mit den Schritten:
- Bereitstellen einer ersten Bauteilkomponente (1), die den ersten Zahnkranz (K1) bildet, der sich axial zwischen einer ersten Stirnseite (F1) und einer zweiten Stirnseite (F2) erstreckt;
- Bereitstellen einer zweiten Bauteilkomponente (2), die den zweiten Zahnkranz (K2) bildet, der sich axial zwischen einer dritten und einer vierten Stirnseite (F3, F4) erstreckt;
- Anordnen der beiden Bauteilkomponenten (1, 2) derart, dass diese mit ihren jeweiligen Zahnkranzachsen auf einer gemeinsamen zentralen Zahnradachse (X) liegen und hierbei die zweite Stirnseite (F2) des ersten Zahnkranzes (K1) und die dritte Stirnseite (F3) des zweiten Zahnkranzes (K2) einander zugewandt sind und
- Einbinden der beiden Bauteilkomponenten (1, 2) in die Zahnradeinrichtung derart, dass diese drehfest miteinander verbunden und axial zueinander festgelegt sind,
- wobei das Einbinden wenigstens einer der beiden Bauteilkomponenten (1, 2) in die Zahnradeinrichtung bewerkstelligt wird durch Ausbildung einer stofflichen Verbindungzone die sich entlang einer Verbindungsfläche erstreckt, die durch wenigstens eine der beiden Bauteilkomponenten (1, 2) bereitgestellt wird.

2. Verfahren nach Anspruch 1, **dadurch gekennzeichnet, dass** die stoffliche Verbindung durch Ausbildung einer Schweißverbindungzone, einer Lötverbindungszone und/oder einer Klebeverbindungszone (WSG1, WSG2, WSG3) bewerkstelligt wird.

3. Verfahren nach Anspruch 2, **dadurch gekennzeichnet, dass** die Schweißverbindungzone, die Lötverbindungszone und/oder die Klebeverbindungszone (WSG1, WSG2, WSG3) derart ausgebildet wird, dass sich diese zumindest partiell um die Zahnradachse (X) herum erstreckt und dabei mit einem Verbindungszoneninnenbereich der Zahnradachse (X) zugewandt ist und/oder, dass die Schweißverbindungzone, die Lötverbindungszone und/oder die Klebeverbindungszone (WSG1, WSG2, WSG3) derart ausgebildet wird, dass sich diese zumindest partiell um die Zahnradachse (X) herum erstreckt und dabei primär quer zu der Zahnradachse ausgerichtet ist.

4. Verfahren nach Anspruch 2, **dadurch gekennzeichnet, dass** im Rahmen der Einbindung der Bauteilkomponenten (1, 2) eine Ausrichtungsvorhaltung der Bauteilkomponenten (1, 2) eingestellt wird, durch welche einer durch die Verbindungstechnik verursachten Wirkung auf die Relativposition der Bauteilkomponenten (1, 2) für die Erlangung der Endposition der Bauteilkomponenten (1, 2 ) Rechnung getragen wird.

5. Verfahren nach wenigstens einem der Ansprüche 1 bis 4, **dadurch gekennzeichnet, dass** wenigstens eine der Bauteilkomponenten (1, 2) über eine Formschlussgeometrie, insbesondere eine Verzahnung oder eine Gleichdickengeometrie oder über eine Passfläche, eine Kegel- oder gewölbte Gürtelfläche, insbesondere Kugelgürtelfläche in die Zahnradeinrichtung eingebunden wird.

6. Verfahren nach wenigstens einem der Ansprüche 1 bis 5, **dadurch gekennzeichnet, dass** die beiden Zahnradstrukturabschnitte (1, 2) im Rahmen des Anordnens derselben radial durch Fügeflächen positioniert werden, die in der Zahnradeinrichtung zumindest zunächst bereitgestellt werden.

7. Verfahren nach wenigstens einem der Ansprüche 1 bis 6, **dadurch gekennzeichnet, dass** zur Positionierung der Zahnradstrukturabschnitte (1, 2) zueinander Fügeflächen herangezogen werden, die zumindest abschnittsweise in der im Rahmen der Einbindung gebildeten adhäsiven und/oder kohäsiven Verbindungszone verlaufen.

8. Verfahren nach wenigstens einem der Ansprüche 1 bis 7, **dadurch gekennzeichnet, dass** ein Flussmittel, ein Lötmittel, ein Bondmedium, ein Diffusionsmedium, und/oder ein Klebemittel bereits vor dem Fügen der Bauteilkomponenten (1, 2) im Bereich der dann die Verbindungsfläche bildenden Bauteilbereiche auf diese Komponenten aufgetragen, appliziert oder auf diesen bereitgehalten wird.

9. Verfahren nach wenigstens einem der Ansprüche 1 bis 8, **dadurch gekennzeichnet, dass** eine Schweißmaterialzugabe, ein Bondmedium, ein Diffusionsmedium, ein Flussmittel, ein Lötmittel und/oder ein Klebemittel nach dem Fügen der Zahnradstrukturabschnitte (1, 2) in den die Verbindungszone bildenden Bereich eingebracht wird.

10. Verfahren nach wenigstens einem der Ansprüche 1 bis 9, **dadurch gekennzeichnet, dass** die unter Fügung der beiden Zahnradstrukturabschnitte (1, 2) gebildete Zahnradeinrichtung einer Nachbearbeitung unterzogen wird und/oder, dass nach dem Fügen der Bauteilkomponenten (1, 2) eine messtechnisch bestimmte Abweichung der Verzahnung von der Sollposition erfasst und mittels eines abtragenden Feinbearbeitungsverfahrens korrigiert wird und/oder, dass diese Bearbeitung an einem oder beiden der Zahnkränze (K1, K2) durchgeführt wird und der jeweils andere Zahnkranz (K2, K1) dabei als Referenz dient.

11. Vorrichtung zur Durchführung des Verfahrens der der oben genannten Art, mit:
- einer Positioniereinrichtung zur Positionierung der ersten und der zweiten Bauteilkomponenten (1,2) zueinander und
- einer Verbindungseinrichtung zur Ausbildung einer Kohäsions- und/oder Adhäsions-Verbindungsstelle innerhalb der Zahnradeinrichtung.

12. Vorrichtung nach Anspruch 11, **dadurch gekennzeichnet, dass** die Positioniereinrichtung (PD) ein in die Verzahnungen beider Zahnkränze (K1, K2) eingreifendes Positionierelement (PD1) umfasst und/oder, dass die Positionierung der beiden Zahnradstrukturabschnitte zueinander durch taktile oder optische Ansätze zur Bestimmung der relativen Position und Ausrichtung der Zahnkränze (K1, K2) und deren Korrektur zueinander bewerkstelligt wird und/oder, dass Haltemittel vorgesehen sind, durch welche die Bauteilkomponenten zueinander fixierbar sind.

13. Vorrichtung nach Anspruch 11 oder 12, **dadurch gekennzeichnet, dass** die Positioniereinrichtung (PD) Stellmittel umfasst, zur Einstellung der Position der Bauteilkomponenten (1, 2) zueinander.

14. Vorrichtung nach Anspruch 11, **dadurch gekennzeichnet, dass** die Positioniereinrichtung (PD) eine Anordnung zur Erfassung hinsichtlich der Winkelrelativposition der Zahnkränze (K1, K2) indikativer Signale umfasst.

15. Zahnradeinrichtung mit:
- einer ersten Bauteilkomponente (1), die einen ersten Zahnkranz (W1) bildet, der sich axial zwischen einer ersten Stirnseite (F1) und einer zweiten Stirnseite (F2) erstreckt;
- einer zweiten Bauteilkomponente (2), die einen zweiten Zahnkranz (W2) bildet, der sich axial zwischen einer dritten und einer vierten Stirnseite (F3, F4) erstreckt;
- wobei die erste Bauteilkomponente (1) und die zweite Bauteilkomponente (2) zu einer Zahnradachse (X) gleichachsig angeordnet sind und die zweite Stirnseite (F2) des ersten Zahnkranzes (W1) und die dritte Stirnseite (F3) des zweiten Zahnkranzes (W2) einander zugewandt sind;
- der erste Zahnkranz (W1) und der zweite Zahnkranz (W2) gleiche Kopfkreisdurchmesser aufweisen und
- die beiden Bauteilkomponenten (1, 2) miteinander drehfest gekoppelt und axial zueinander festgelegt sind
- wobei die Einbindung wenigstens einer der beiden Bauteilkomponenten (1, 2) in die Zahnradeinrichtung bewerkstelligt ist durch eine Adhäsions- und/oder Kohäsionsverbindungszone die sich im Bereich einer Verbindungsfläche erstreckt die durch wenigstens eine der Bauteilkomponenten (1, 2) bereitgestellt ist.

16. Zahnradeinrichtung nach Anspruch 15, **dadurch gekennzeichnet, dass** die zweite Stirnseite (F2) des ersten Zahnkranzes (W1) und die dritte Stirnseite (F3) des zweiten Zahnkranzes (W2) berührungsfrei zueinander angeordnet sind.

17. Zahnradeinrichtung nach Anspruch 15, **dadurch gekennzeichnet, dass** die zweite Stirnseite (F2) des ersten Zahnkranzes (W1) und die dritte Stirnseite (F3) des zweiten Zahnkranzes (W2) sich berührend angeordnet sind.
